# EUROPÄISCHE PATENTSCHRIFT

(11) **EP 1 987 315 B1**
(45) Veröffentlichungstag und Bekanntmachung des Hinweises auf die Patenterteilung: **16.05.2012**
(21) Anmeldenummer: 07721957.4
(22) Anmeldetag: 23.02.2007
(51) Int. Cl.: G01B 3/11, B66D 5/32

(54) **SEILLÄNGENGEBER**
CABLE LENGTH SENSOR
CAPTEUR DE LONGUEUR DE CÂBLE

(30) Priorität: 23.02.2006 DE 102006008947; 07.02.2007 DE 102007006813
(43) Veröffentlichungstag der Anmeldung: 05.11.2008
(73) Patentinhaber: Micro-Epsilon Messtechnik GmbH & Co. KG, 94496 Ortenburg (DE)
(72) Erfinder: BIRCHINGER, Thomas, 94081 Fürstenzell (DE); HRUBY, Jaroslav, 391 65 Bechyne (CZ)
(74) Vertreter: Ullrich & Naumann
(86) Internationale Anmeldenummer: PCT/DE2007/000347
(87) Internationale Veröffentlichungsnummer: WO 2007/095932

(56) Entgegenhaltungen:
- EP-A1- 0 778 239
- EP-A1- 1 057 767
- DE-U1-202004 007 424
- US-A- 443 888

## Beschreibung

Die Erfindung betrifft einen Seillängengeber, insbesondere einen Seilzug-Wegsensor, mit einer Seiltrommel, einem auf der Seiltrommel aufgewickelten Messseil und einer in der Ausgangsposition zumindest geringfügig vorgespannten Rückstelleinrichtung, wobei das Messseil gegen die Kraft der Rückstelleinrichtung unter Drehung der Seiltrommel von dieser abziehbar ist und wobei durch das Abziehen des Messseils die Rückstelleinrichtung weiter spannbar ist.

An dieser Stelle sei angemerkt, dass hier zwar von einem Seillängengeber und entsprechend von einer Seiltrommel sowie von einem Messseil die Rede ist, dass jedoch der Begriff "Messseil" im Sinne von "Mittel zum Messen" zu verstehen ist. Bei Verwendung eines Messseils kann dieses aus beliebigem Material, beispielsweise aus Metall bzw. Metalllitze, aus einadrigem Metall oder aus Textil unterschiedlichster Machart, gefertigt sein. Statt der Verwendung eines Messseils ist der Einsatz eines Messbandes möglich, welches ebenfalls aus textilem Material, aus Kunststoff oder aus Metall gefertigt sein kann. Letztendlich ist wesentlich, dass das zum Messen dienende Medium längen- bzw. zugstabil ausgeführt ist. Um welches Mittel es sich dabei im Konkreten handelt, ist für die beanspruchte Lehre unwesentlich.

Seillängengeber der gattungsbildenden Art sind seit Jahren in unterschiedlichsten Ausführungen bekannt. Zu den wesentlichen Bestandteilen eines solchen Seillängengebers gehört das Messseil, welches an dem in seiner jeweiligen Position zu detektierenden Objekt endseitig befestigt ist. Das Messseil ist auf der Seiltrommel aufgewickelt und ist durch das Rückstellelement vorgespannt. Entsprechend der jeweiligen Anwendung kann ein besonderer Sensor vorgesehen sein, der mit der Seiltrommel gekoppelt ist. Da der Seiltrommeldurchmesser bekannt ist, lässt sich über eine meist externe Auswerteeinheit die abgezogene Seillänge über den Sensor ermitteln.

Bei dem bekannten Seillängengeber wird das Messseil auf die Seiltrommel aufgewickelt, wobei das Rückstellelement im komplett aufgewickelten Zustand der Seiltrommel zumindest geringfügig vorgespannt ist. Bewegen sich das Objekt und der Sensor relativ zueinander, wird das Messseil von der Seiltrommel gezogen. Bei umgekehrter Bewegungsrichtung, wenn also das Messseil aufgrund der Rückstellkraft des Rückstellelements wieder auf die Seiltrommel gewickelt wird, findet eine Bewegung des Objekts zur Seiltrommel hin bzw. zum Sensorelement hin statt.

Als druckschriftlicher Stand der Technik sei lediglich beispielhaft die EP 0 778 239 B1 genannt, die einen gattungsbildenden Seillängengeber zeigt. Des Weiteren sei verwiesen auf die US 4,443,888, die ebenfalls einen gattungsbildenden Seillängengeber zeigt. In beiden Fällen sind die Seiltrommel und die Rückstelleinrichtung in einem Gehäuse angeordnet, wobei es zum Austausch der Rückstelleinrichtung erforderlich ist, den gesamten Seillängengeber auszutauschen und - werkseitig - zu demontieren.

Zu dem aus der Praxis bekannten Stand der Technik sei darauf hingewiesen, dass die Seillängengeber der gattungsbildenden Art häufig Draht- oder Hybridpotentiometer als Sensorelemente nutzen. Ein wesentlicher Nachteil bei diesen Sensorelementen ist die geringe Lebensdauer, die insoweit die Lebensdauer des gesamten Seillängengebers definiert. Aus diesem Grunde werden mittlerweile u.a. auch Leitplastikpotentiometer oder verschleißfreie induktive, magnetische oder optische Sensoren eingesetzt, zumal deren Lebensdauer wesentlich höher ist. In einem solchen Falle wird die Lebensdauer des Seillängengebers nicht durch das jeweilige Sensorelement, sondern regelmäßig durch die Lebensdauer der Rückstelleinrichtung begrenzt. Typische Lebensdauern handelsüblicher Rückstelleinrichtungen liegen im Bereich zwischen 1 und 2 Millionen Zyklen, wobei ein Zyklus einem kompletten Abwickeln und einem kompletten Aufwickeln des Messseils entspricht. Bei ungünstigen Einsatzbedingungen, zum Beispiel bei hohen Seilgeschwindigkeiten und/oder Beschleunigungen des Messseils, kann die Lebensdauer des Seiflängengebers deutlich verringert sein.

Wird der Seillängengeber bei hohen Bewegungsfrequenzen eingesetzt, ist mit einer äußerst geringen Lebensdauer zu rechnen, da nämlich sehr häufig bereits nach wenigen Monaten eine Beschädigung eintritt. Dieser Situation wird üblicherweise entweder durch einen schadensbezogenen Sensorwechsel oder durch einen vorbeugenden Sensorwechsel im Rahmen eines relativ kurzen Serviceintervalls entgegengetreten. Anstelle eines Austauschs des gesamten Seillängengebers ist es auch denkbar, lediglich die Federelemente der Rückstelleinrichtung zu wechseln, was jedoch einen erheblichen Aufwand mit sich bringt.

Zu beachten ist, dass ein Federbruch in der Rückstelleinrichtung regelmäßig zu weiteren Schäden führt, beispielsweise zu einem Seilriss am Messseil. In einem solchen Falle ist es erforderlich, den kompletten Seillängengeber zu demontieren und ein Austauschgerät zu montieren. Eine Ummontage vor Ort ist durch unqualifiziertes Personal praktisch nicht möglich, so dass ein besonderer Reparaturservice erforderlich wird. Zu den wesentlichen Nachteilen gehören insbesondere auch lange Maschinenausfallzeiten, da nämlich der komplette Seillängengeber ausgebaut werden muss. Ein neuer Seillängengeber ist einzubauen, wobei aufgrund einer Vorhaltung eines kompletten Seillängengebers hohe Lagerhaltungskosten entstehen.

Des Weiteren ist es im Falle eines kompletten Austauschs des Seillängengebers erforderlich, die Steuerung und/oder den gesamten Seillängengeber neu abzugleichen. Der defekte Seillängengeber wird üblicherweise zum Hersteller eingeschickt, was einen erheblichen Verwaltungsaufwand sowie Transportkosten mit sich bringt. Da die konventionelle Reparatur des Seillängengebers sehr arbeitsintensiv ist, entstehen relativ hohe Reparaturkosten. Mit zusätzlichen Kosten ist im Falle von Folgeschäden am Seillängengeber zu rechnen.

Will man dem Schadensfall vorbeugen, bietet sich bei den herkömmlichen Seillängengebern der vorbeugende Wechsel in einem Serviceintervall an. In diesem Falle ist der Sensor - mehr oder weniger regelmäßig - auszutauschen bzw. ist der jeweils im Einsatz befindliche Seillängengeber auszubauen. Ein neuer, stets vorzuhaltender Seillängengeber ist vom Fachpersonal einzubauen, was entsprechend den voranstehenden Ausführungen erhebliche Lagerkosten zum Vorhalten des Seillängengebers mit sich bringt.

Nach dem Einbau des neuen Seillängengebers ist die Steuerung und/oder der komplette Seillängengeber neu abzugleichen. Der ausgetauschte Seillängengeber wird zum Hersteller eingeschickt, wodurch abermals Kosten entstehen, nämlich einerseits Kosten durch die Verwaltung und andererseits Transportkosten. Der zum Hersteller eingeschickte Seillängengeber wird generalüberholt, was wiederum arbeitsintensiv ist.

Zieht man in Betracht, dass man die zuvor als Schwachstelle bezeichneten Federn bzw. Federpakete der Rückstelleinrichtung separat austauscht, so könnte dies - theoretisch - vor Ort oder beim Hersteller erfolgen. Bei bislang bekannten Seillängengebern, so beispielsweise gemäß EP 0 778 239 B1 oder US 4, 443,888, stellt der reine Federwechsel einen äußerst arbeitsaufwendigen Ablauf dar. Außerdem sind hochqualifizierte Fachkräfte erforderlich, die insbesondere auch über ein jeweils erforderliches Sonderwerkzeug verfügen. Darüber hinaus besteht bei zahlreichen Bauformen eine ganz erhebliche Verletzungsgefahr durch ein mögliches Herausspringen der Federn aus dem Gehäuse, sobald das Gehäuse geöffnet und die Federn der Rückstelleinrichtung herausgezogen werden.

Die zum Austausch der Federn der Rückstelleinrichtung durchzuführenden Arbeiten sind besonders komplex, insbesondere dann, wenn der Seillängengeber über mehrere in Reihe oder parallel geschaltete Federn verfügt. Zum Austausch der Federn ist das komplette Gehäuse oder zumindest der Federkasten zu öffnen. Die Federn sind zu entspannen, wobei eine Vorspannung typischer Federpakete bis zu 30 Umdrehungen betragen kann. Werden die Federn - nach dem Entspannen - ausgetauscht, ist zum beachten, dass diese ineinander und/oder in die Drehachse eingehängt sind. Werden neue Federn oder Federpakete eingetauscht, sind diese - zum Erzeugen der Vorspannung - aufzuziehen. Dabei handelt es sich wohl um den aufwendigsten Arbeitsschritt, da dazu bis zu 150 Federumdrehungen erforderlich sind. Ohne ein Spezialwerkzeug ist das Aufziehen der Federn nicht möglich. Darüber hinaus besteht die Gefahr, dass beim Aufziehen der Federn Fehler in der zulässigen Anzahl von Umdrehungen gemacht werden, was wiederum die Lebensdauer der Feder oder des Federpakets reduziert. Außerdem ist es von Nachteil, dass die Arbeiten zum Austausch der einzelnen Federn in aller Regel nur dann möglich sind, wenn der komplette Seillängengeber aus der jeweiligen Anlage ausgebaut ist. Auch dies erfordert einen ganz erheblichen zeitlichen Aufwand und bedingt letztendlich einen Stillstand der jeweiligen Maschine, Anlage, etc.

Im Lichte der voranstehenden Ausführungen liegt der vorliegenden Erfindung die Aufgabe zugrunde, den Seillängengeber der gattungsbildenden Art derart auszugestalten und weiterzubilden, dass eine Wartung und Instandhaltung des kompletten Seillängengebers bei geringstmöglichem Aufwand auch durch wenig qualifiziertes Personal möglich ist.

Die voranstehende Aufgabe wird durch einen Seillängengeber mit den Merkmalen des Patentanspruchs 1 gelöst. Ein solcher Seillängengeber ist dadurch gekennzeichnet, dass die Rückstelleinrichtung in einem Gehäuse angeordnet ist, dass Kopplungsmittel zum Ankoppeln der Rückstelleinrichtung an die Drehbewegung der Seiltrommel vorgesehen sind und dass dem Gehäuse von außerhalb des Gehäuses betätigbare Feststellmittel zum Feststellen der jeweiligen Position der Rückstelleinrichtung, insbesondere der zumindest geringfügig vorgespannten Ausgangsposition der Rückstelleinrichtung, zugeordnet oder zuordenbar sind.

Erfindungsgemäß ist erkannt worden, dass bei den gattungsgemäßen Seillängengebern die Rückstelleinrichtung eine Schwachstelle in Bezug auf die Lebensdauer bzw. in Bezug auf die Wartung und/oder Reparatur darstellt. Die diesbezügliche Problematik lässt sich in weiter erfindungsgemäßer Weise dadurch umgehen, dass die komplette Rückstelleinrichtung in einem eigenen Gehäuse angeordnet ist, wobei zum Ankoppeln der Rückstelleinrichtung an die Drehbewegung der Seiltrommel Kopplungsmittel vorgesehen sind. Des Weiteren sind dem Gehäuse von außerhalb des Gehäuses betätigbare Feststellmittel zum Feststellen der jeweiligen Position der Rückstelleinrichtung, insbesondere der zumindest geringfügig vorgespannten Ausgangsposition der Rückstelleinrichtung, zugeordnet oder zuordenbar.

Der Kerngedanke der vorliegenden Erfindung liegt demnach in einer ganz besonderen modularen Konstruktion des Seillängengebers, nämlich dahingehende dass die komplette Rückstelleinrichtung im bereits gespannten, d.h. im einsatzfähigen Zustand, gewechselt werden kann. Dazu ist die Rückstelleinrichtung modular ausgeführt. Entsprechend ist die Rückstelleinrichtung im Gehäuse bereits aufgezogen, so dass sowohl eine Demontage als auch eine Montage der kompletten Rückstelleinrichtung - im funktionsfähigen Zustand - möglich ist. Entsprechend wird die Rückstelleinrichtung im vorgespannten Zustand ausgeliefert und gegebenenfalls gelagert. In vorteilhafter Weise umfasst die Rückstelleinrichtung mindestens ein Rückstellelement, wobei es in weiter vorteilhafter Weise möglich ist, zwei, drei oder mehrere Rückstellelemente parallel oder in Reihe zueinander anzuordnen. Die Rückstellelemente sind in der Ausgangsposition zwischen dem Gehäuse und einer Achse bzw. den Kopplungsmitteln vorgespannt.

Insbesondere im Rahmen einer besonders einfachen Ausgestaltung sind die Rückstellelemente als Federn ausgeführt, wobei sich Spiralfedern aufgrund ihrer annähernd rotationssymmetrischen Ausgestaltung besonders eignen. Im Falle der Verwendung von Flachspiralfedern bietet es sich an, diese konzentrisch um die drehbare Achse der Rückstelleinrichtung anzuordnen, wobei das innere Ende der Flachspiralfeder mit der Achse und das äußere Ende der Flachspiralfeder mit dem Gehäuse oder mit von dem Gehäuse getragenen Halteelementen verbunden ist, so dass sich entsprechend der Anordnung eine Vorspannung aufbauen lässt.

Wie bereits zuvor ausgeführt, wirken die Federn über eine vorzugsweise zentral verlaufende Achse mit den Kopplungsmitteln zusammen. Die Achse kann sich zumindest geringfügig aus dem Gehäuse heraus erstrecken, wobei dies nicht zwingend erforderlich ist.

Ebenso ist es denkbar, dass es sich bei der Achse um eine Art Hohlwelle handelt, in der eine Kupplung untergebracht ist. In diese könnte dann eine Vollwelle mit entsprechendem Kupplungselement eingesteckt werden. Bei Verwendung einer solchen Hohlwelle müsste diese nicht aus dem Gehäuse herausragen.

Insbesondere bei Verwendung einer sich zumindest geringfügig aus dem Gehäuse heraus erstreckenden Achse wirken die Kopplungsmittel zwischen der Achse der Rückstelleinrichtung und einer Achse der Seiltrommel, um nämlich die beiden Achsen drehfest miteinander zu verbinden. Im Rahmen einer ganz besonders einfachen Ankopplung sind die beiden Achsen fluchtend zueinander ausgerichtet.

Im Konkreten ist es denkbar, dass die Rückstellelemente in einem ersten Gehäuseteil und die Kopplungsmittel in einem zweiten, vorzugsweise auf der dem ersten

Gehäuseteil abgewandten Seite offenen zweiten Gehäuseteil, angeordnet sind. Der zweite, auf einer Seite offene Gehäuseteil dient zum Anschluss bzw. zum Anflanschen an das Gehäuse der Seiltrommel. Entsprechend sollte die Achse der Seiltrommel aus dem Gehäuse der Seiltrommel herausragen, so dass die beiden Achsen - endseitig - innerhalb des zweiten Gehäuseteils über die Kopplungsmittel miteinander verbindbar sind.

Der erste Gehäuseteil, der die üblicherweise als Federn ausgebildeten Rückstellelemente umfasst, bildet gegebenenfalls gemeinsam mit dem zweiten Gehäuseteil eine Art Federkasten, der als modulares und insoweit aus- bzw. eintauschbares Bauteil ausgeführt ist.

Entsprechend den voranstehenden Ausführungen lässt sich die Rückstelleinrichtung mittels der Feststellmittel in der zumindest teilweise vorgespannten Ausgangsposition halten. Diese Feststellmittel sind im Wesentlichen dem zweiten Gehäuseteil zugeordnet. Sie wirken von außerhalb des Gehäuses auf die Achse der Rückstelleinrichtung und/oder auf die Kopplungsmittel, so dass bei Aktivierung der Feststellmittel ein durch die Federkraft der Federn bewirktes Drehen der Achse wirksam vermieden ist. Bei aktivierten Feststellmitteln lässt sich die Spannung zwischen dem Gehäuse und der Achse unter Zwischenschaltung der Federn aufrechterhalten, so dass sich die modular ausgebildete Rückstelleinrichtung unabhängig von den weiteren Bestandteilen des Seillängengebers handhaben lässt.

Im Konrekten ist es von Vorteil, wenn die Feststellmittel mindestens einen Arretierstift umfassen, der sich durch die Gehäusewandung hindurch zu der Achse der Rückstelleinrichtung bzw. zu den Kopplungsmitteln erstreckt. Dabei ist es denkbar, dass der Arretierstift zumindest bereichsweise mit einem Außengewinde ausgestattet ist, so dass es sich entweder in die Gehäusewandung oder in die Achse bzw. in die Kopplungsmittel hineinschrauben lässt. Ein reines Einstecken unter Ausnutzung einer gewissen Klemmwirkung ist ebenfalls denkbar.

Wie bereits zuvor erwähnt, ist die Seiltrommel ebenfalls in einem Gehäuse angeordnet, wobei an das Gehäuse der Seiltrommel die Rückstelleinrichtung, vorzugsweise über das zweite Gehäuseteil, anflanschbar ist.

Auch dem Gehäuse der Seiltrommel sind Feststellmittel zugeordnet bzw. zuordenbar, die zur drehfesten Arretierung der Seiltrommel dienen. Zum Zwecke des Aus- oder Einbaus lässt sich somit die Seiltrommel innerhalb ihres Gehäuses drehfest arretieren, um nämlich das Anflanschen der Rückstelleinrichtung zu ermöglichen bzw. zu begünstigen. Im Konkreten umfassen die Feststellmittel der Seiltrommel mindestens einen sich von außerhalb des Gehäuses bis zur Seiltrommel hindurch erstreckenden Arretierstift, der auf die Seiltrommel eine Klemmwirkung ausübt. Ebenso ist es denkbar, dass der Arretierstift in eine entsprechende Ausnehmung an bzw. in der Seiltrommel greift, wobei der Arretierstift in ganz besonders vorteilhafter Weise in seiner arretierenden Stellung auf eine Stirnfläche der Seiltrommel greift bzw. auf diese wirkt.

In Bezug auf eine einfache Handhabung des Seillängengebers zum Zwecke des Austauschs der Rückstelleinrichtung ist es von weiterem Vorteil, wenn das Gehäuse der Seiltrommel einen größeren Durchmesser als das Gehäuse der Rückstelleinrichtung hat. Im Rahmen einer solchen Ausgestaltung ist es möglich, dass der Arretierstift der Seiltrommel über die über das Gehäuse der Rückstelleinrichtung hinausragende Stirnwand des Gehäuses der Seiltrommel in diese hineinragt, so dass eine Handhabung des Arretierstifts zum Blockieren der Seiltrommel von außerhalb möglich ist, und zwar auch bei angeflanschter Rückstelleinrichtung. Die Montage bzw. Demontage der Rückstelleinrichtung ist dadurch ganz erheblich begünstigt.

In weiter vorteilhafter Weise ist ein Sensorelement zum Detektieren der Drehung der Seiltrommel vorgesehen, vor allem dann, wenn es sich bei dem Seillängengeber um eine Art Seilzug-Wegsensor handelt. Das Sensorelement dient zum Detektieren der Drehung der Seiltrommel, wobei bei bekanntem Trommeldurchmesser die abgewickelte oder aufgezogene Seillänge exakt ermittelbar ist.

Das Sensorelement kann der Drehachse der Seiltrommel oder der Drehachse der Rückstelleinrichtung zugeordnet sein. Somit ist jedenfalls dann eine beidseitige Anbringung des Sensorelements denkbar, wenn die Drehachsen beidseits der jeweiligen Gehäuse nach außerhalb der Gehäuse ragen, so dass ein mechanisches Ankoppeln des Sensorelements möglich ist.

In besonders vorteilhafter Weise ist das Sensorelement auf der der Rückstelleinrichtung abgewandten Seite der Seiltrommel, vorzugsweise an deren Gehäuse, angeflanscht, und dabei drehfest mit der Drehachse der Seiltrommel verbunden. Dazu kann ein besonderer Gehäusestutzen vorgesehen sein, der wiederum an das Gehäuse der Seiltrommel angeflanscht ist. Unmittelbar an diesen Gehäusestutzen schließt sich das Sensorelement als modulares Bauteil an, so dass auch dieses - als solches - einfachst vom Gehäuse der Seiltrommel bzw. von dem dort vorgesehenen Gehäusestutzen entfernbar ist. Eine drehfeste Verbindung zwischen entsprechenden Kopplungsmitteln am Sensorelement und am freien Ende der Drehachse der Seiltrommel lässt sich realisieren.

Des Weiteren sei angemerkt, dass es sich bei dem Sensorelement um einen beliebigen Sensor handeln kann, vorzugsweise um einen Drehgeber.

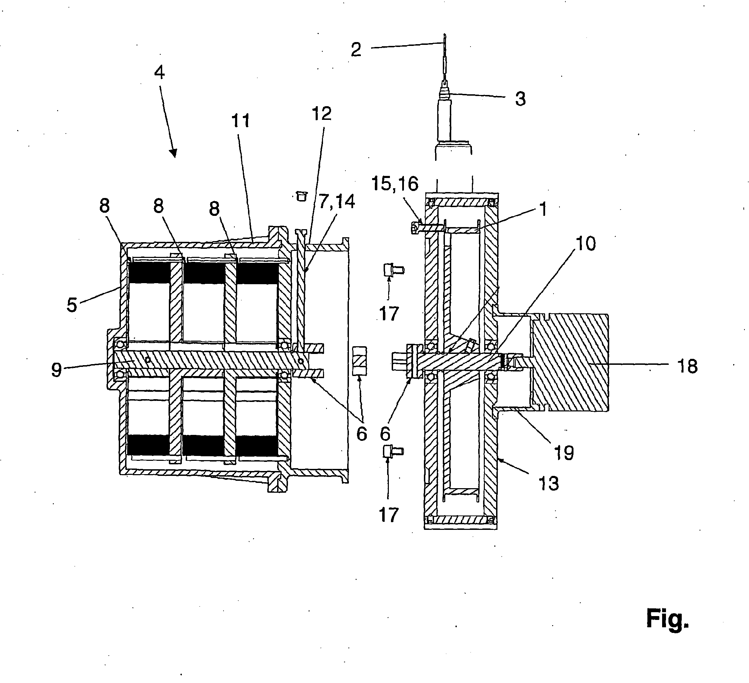

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche, andererseits auf die nachfolgende Erläuterung eines Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigt
- die einzige Fig.: in einer schematischen Ansicht, auseinander gezogen, ein Ausführungsbeispiel eines erfindungsgemäßen Seillängengebers.

Die einzige Fig. zeigt ein Ausführungsbeispiel eines erfindungsgemäßen Seillängengebers mit den wesentlichen Bestandteilen. Bei dem hier gezeigten Seillängengeber handelt es sich im Konkreten um einen Seilzug-Wegsensor. Er umfasst eine Seiltrommel 1 und ein auf der Seiltrommel 1 aufgewickeltes Messseil 2, wobei das Messseil 2 lediglich am Messseilausgang 3 angedeutet ist.

Der Seillängengeber umfasst des Weiteren eine in der Ausgangsposition zumindest geringfügig vorgespannte Rückstelleinrichtung 4, wobei das Messseil 2 gegen die Kraft der Rückstelleinrichtung 4 unter Drehung der Seiltrommel 1 von dieser abziehbar ist und wobei durch das Abziehen des Messseils 2 die Rückstelleinrichtung 4 weiter gespannt wird.

Erfindungsgemäß ist die Rückstelleinrichtung 4 in einem Gehäuse 5 angeordnet. Des Weiteren sind Kopplungsmittel 6 vorgesehen, die zum Ankoppeln der Rückstelleinrichtung 4 an die Drehbewegung der Seiltrommel 1 dienen. Feststellmittel 7 dienen zum Feststellen der jeweiligen Position der Rückstelleinrichtung 4, insbesondere der zumindest geringfügig vorgespannten Ausgangsposition der Rückstelleinrichtung 4. Die Feststellmittel 7 sind der Rückstelleinrichtung zugeordnet bzw. zuordenbar.

Die einzige Fig. lässt erkennen, dass die Rückstelleinrichtung 4 drei parallel wirkende Rückstellelemente umfasst, wobei jedes der Rückstellelemente als Feder 8 ausgeführt ist. Jede Feder 8 ist mit ihrem inneren Ende mit einer drehbaren Achse 9 und mit ihrem äußeren Ende am Gehäuse 5 oder an entsprechenden Haltestiften, die wiederum am Gehäuse 5 festgelegt sind, arretiert. Folglich lassen sich die Federn 8 zwischen dem Gehäuse 5 und der Achse 9 spannen, wobei das Verspannen und Entspannen über eine Drehbewegung der Achse 9 erfolgt.

Die im Gehäuse 5 zentral verlaufende Achse 9 erstreckt sich zumindest geringfügig aus dem Gehäuse 5 heraus und wirkt dort mit den Kopplungsmitteln 6 zusammen. Im Konkreten wirken die Kopplungsmittel 6 zwischen der Achse 9 der Rückstelleinrichtung 4 und einer Achse 10 der Seiltrommel 1.

Die Kopplungsmittel 6 dienen zur drehfesten Verbindung der fluchtenden Achsen 9, 10, wobei die Kopplungsmittel 6 mehrere Bestandteile umfassen können.

Die einzige Fig. lässt des Weiteren erkennen, dass die Rückstellelemente bzw. Federn 8 der Rückstelleinrichtung 4 in einem ersten Gehäuseteil 11 in nahezu gekapselter Weise angeordnet sind. Die Kopplungsmittel 6 sind in einem zweiten, auf der dem ersten Gehäuseteil 11 abgewandten Seite offenen Gehäuseteil 12 angeordnet. Gemeinsam bilden die beiden Gehäuseteile 11, 12 eine Art Federkasten, wobei der zweite Gehäuseteil 12 zum Anflanschen an das Gehäuse 13 der Seiltrommel 1 dient.

Die Feststellmittel 7 sind im Wesentlichen dem zweiten Gehäuseteil 12 zugeordnet, wobei die Feststellmittel 7 von außerhalb des Gehäuses 5 bzw. des zweiten Gehäuseteils 12 auf die Achse 9 der Rückstelleinrichtung 4 bzw. auf die dort vorgesehenen Kopplungsmittel 6 wirken. Im Konkreten umfassen die Feststellmittel 7 einen Arretierstift 14, der sich durch die Gehäusewandung hindurch zu der Achse 9 der Rückstelleinrichtung 4 bzw. zu den dort vorgesehenen Kopplungsmitteln 6 ersteckt.

Wie bereits zuvor erwähnt, ist die Seiltrommel 1 in dem Gehäuse 13 angeordnet. An das Gehäuse 13 ist das Gehäuse 5 der Rückstelleinrichtung 4 bzw. ist der zweite Gehäuseteil 12 der Rückstelleinrichtung 4 anflanschbar.

Die einzige Fig. lässt des Weiteren erkennen, dass an dem Gehäuse 13 der Seiltrommel 1 ebenfalls Feststellmittel 15 vorgesehen sind, die zur drehfesten Arretierung der Seiltrommel 1 dienen. Diese Feststellmittel 15 umfassen einen von außerhalb sich durch das Gehäuse 13 hindurch erstreckenden Arretierstift 16, der im einfachsten Falle die Seiltrommel 1 durch Klemmwirkung in der jeweiligen Drehposition hält.

Befestigungsschrauben 17 dienen zum Verschrauben der beiden Gehäuse 5 (mit den Gehäuseteilen 11, 12) und 13.

Auf der der Rückstelleinrichtung 4 gegenüberliegenden Seite des Gehäuses 13 der Seiltrommel 1 ist ein Sensorelement 18 angeordnet, welches zum Detektieren der Drehung der Seiltrommel 1 dient. Das Sensorelement 18 ist über einen Flansch bzw. Gehäusestutzen 19 drehfest mit der Achse 10 der Seiltrommel 1 verbunden, wobei das Sensorelement 18 ebenfalls modular aufgebaut bzw. ausgeführt ist. Auch das Sensorelement 18 lässt sich einfach vom Gehäuse 13 der Seiltrommel 1 entfernen bzw. modular austauschen.

Soll bei dem erfindungsgemäßen Seillängengeber die.Rückstelleinrichtung 4 mit den darin befindlichen Federn 8 ausgetauscht werden, wird der Seillängengeber in eine Position verbracht, in der das Messseil 2 komplett auf der Seiltrommel 1 aufgewickelt ist. Danach wird die Seiltrommel 1 in ihrer Position blockiert, nämlich über die dazu vorgesehenen Feststellmittel 15 bzw. den dazu dienenden Arretierstift 16. Gleiches gilt für die Rückstelleinrichtung 4 bzw. für die darin befindlichen Federn 8. So wird das komplette Federpaket mittels der Feststellmittel 7 bzw. mittels des dazu vorgesehenen Arretierstifts 14 blockiert. Die Befestigungsschrauben 17 werden gelöst, so dass sich die gesamte Rückstelleinrichtung mit den darin befindlichen Federn 8 vom Gehäuse 13 der Seiltrommel 1 abziehen lässt. Eine neue Rückstelleinrichtung 4 mit darin befindlichen, bereits vorgespannten Feder 8 wird aufgesteckt, wobei zwischen der Achse 10 der Seiltrommel 1 und der Achse 9 der Rückstelleinrichtung 4 eine drehfeste Verbindung durch die Kopplungsmittel 6 hergestellt wird. Die Befestigungsschrauben 17 werden angezogen. Anschließend werden die Arretierstifte 14 und 16 gelöst, so dass der Seillängengeber bei vorgespannter Rückstelleinrichtung 4 einsetzbar ist. Ein Wechsel der Rückstelleinrichtung 4 ist somit in nur wenigen Minuten ohne Spezialwerkzeug praktisch von jedermann durchführbar. Ein neuer Abgleich zwischen Sensor und Steuerung ist nicht erforderlich.

Schließlich sei angemerkt, dass das voranstehend erörterte Ausführungsbeispiel lediglich zur beispielhaften Erörterung der beanspruchten Lehre dient, diese jedoch nicht auf das Ausführungsbeispiel einschränkt.

## Patentansprüche

1. Seillängengeber, insbesondere Seilzug-Wegsensor, mit einer Seiltrommel (1), einem auf der Seiltrommel (1) aufgewickelten Messseil (2) oder Messband und einer in der Ausgangsposition zumindest geringfügig vorgespannten Rückstelleinrichtung (4), wobei das Messseil (2) oder Messband gegen die Kraft der Rückstelleinrichtung (4) unter Drehung der Seiltrommel (1) von dieser abziehbar ist und wobei durch das Abziehen des Messseils (2) die Rückstelleinrichtung (4) weiter spannbar ist, **dadurch gekennzeichnet, dass** die Rückstelleinrichtung (4) in einem Gehäuse (5) angeordnet ist, dass Kopplungsmittel (6) zum Ankoppeln der Rückstelleinrichtung (4) an die Drehbewegung der Seiltrommel (1) vorgesehen sind und dass dem Gehäuse (5) von außerhalb des Gehäuses betätigbare Feststellmittel (7) zum Feststellen der jeweiligen Position der Rückstelleinrichtung (4), insbesondere der zumindest geringfügig vorgespannten Ausgangsposition der Rückstelleinrichtung (4), zugeordnet oder zuordenbar sind.

2. Seillängengeber nach Anspruch 1, **dadurch gekennzeichnet, dass** die Rückstelleinrichtung (4) mindestens ein, vorzugsweise zwei, drei oder mehrere einzeln oder gemeinsam spannbare Rückstellelemente (4) umfasst, die in der Ausgangsposition zwischen dem Gehäuse (5) und einer Achse bzw. den Kopplungsmitteln (6) vorgespannt sind, wobei
die Rückstellelemente (4) als Federn (8), vorzugsweise als Flachspiralfedem ausgeführt sein können.

3. Seillängengeber nach Anspruch 2, **dadurch gekennzeichnet, dass** die Feder oder Federn (8) über eine vorzugsweise zentral verlaufende Achse mit den Kopplungsmitteln (6) zusammenwirken, wobei
sich die Achse zumindest geringfügig aus dem Gehäuse (5) heraus erstrecken kann, wobei
die Kopplungsmittel (6) vorzugsweise zwischen der Achse (9) der Rückstelleinrichtung (4) und einer Achse (10) der Seiltrommel (1) wirken und wobei
die Kopplungsmittel (4) zur drehfesten Verbindung der vorzugsweise fluchtenden Achsen (9, 10) dienen können.

4. Seillängengeber nach einem der Ansprüche 1 bis 3, **dadurch gekennzeichnet, dass** die Rückstellelemente (4) in einem ersten Gehäuseteil (11) und die Kopplungsmittel (6) in einem zweiten, vorzugsweise auf der dem ersten Gehäuseteil (11) abgewandten Seite offenen zweiten Gehäuseteil (12) angeordnet sind, wobei zumindest der erste Gehäuseteil (11), ggf. gemeinsam mit dem zweiten Gehäuseteil (12), eine Art Federkasten bilden kann.

5. Seillängengeber nach Anspruch 4, **dadurch gekennzeichnet, dass** die Feststellmittel (7) im Wesentlichen dem zweiten Gehäuseteil (12) zugeordnet sind, wobei
die Feststellmittel (7) von außerhalb des Gehäuses (5) auf die Achse (9) der Rückstelleinrichtung (4) und/oder auf die Kopplungsmitteln (6) wirken können und/oder wobei
die Feststellmittel (7) mindestens einen Arretierstift (14) umfassen können, der sich durch die Gehäusewandung hindurch zu der Achse (9) der Rückstelleinrichtung (4) bzw. zu den Kopplungsmitteln (6) erstreckt.

6. Seillängengeber nach einem der Ansprüche 1 bis 5, **dadurch gekennzeichnet, dass** die Seiltrommel (1) in einem Gehäuse (5) angeordnet ist, an das das Gehäuse (5) der Rückstelleinrichtung (4) anflanschbar ist, wobei
dem Gehäuse (5) der Seiltrommel (1) Feststellmittel (15) zugeordnet sein können, die zur drehfesten Arretierung der Seiltrommel (1) dienen, wobei die Feststellmittel (15) einen sich von außerhalb durch das Gehäuse (5) hindurch erstreckenden Arretierstift (16) umfassen können und wobei der Arretierstift (16) in seiner die Seiltrommel (1) arretierenden Stellung auf eine Stirnfläche der Seiltrommel (1) greifen kann.

7. Seillängengeber nach Anspruch 6, **dadurch gekennzeichnet, dass** das Gehäuse (5) der Seiltrommel (1) einen größeren Durchmesser als das Gehäuse (5) der Rückstelleinrichtung (4) hat und/oder
dass der Arretierstift (16) über die über das Gehäuse (5) der Rückstelleinrichtung (4) hinausragende Stirnwand des Gehäuses (5) der Seiltrommel (1) in dieses hineinragt.

8. Seillängengeber nach einem der Ansprüche 1 bis 7, **dadurch gekennzeichnet, dass** ein Sensorelement (18) zum Detektieren der Drehung der Seiltrommel (1) vorgesehen ist, wobei
das Sensorelement (18) der Drehachse der Seiltrommel (1) oder der Rückstelleinrichtung (4) zugeordnet sein kann.

9. Seillängengeber nach Anspruch 8, **dadurch gekennzeichnet, dass** das Sensorelement (18) auf der der Rückstelleinrichtung (4) abgewandten Seite der Seiltrommel (1), vorzugsweise an deren Gehäuse (5), angeflanscht und dabei drehfest mit der Drehachse (10) der Seiltrommel (1) verbunden ist.

10. Seillängengeber nach Anspruch 9, **dadurch gekennzeichnet, dass** das Sensorelement (18) über einen Gehäusestutzen (19) an das Gehäuse (5) der Seiltrommel (1) angeflanscht ist, wobei
es sich bei dem Sensorelement (18) um einen Drehgeber handeln kann.

## Claims

1. A cable length sensor, in particular, a Bowden cable displacement sensor, comprising a cable drum (1), measuring cable (2) or measuring tape wound on the cable drum (1) and a return device (4) at least lightly pre-tensioned in the start position, wherein the measuring cable (2) or measuring tape is withdrawable from the cable drum (1) against the force of the return device (4) by rotating the cable drum (1) and wherein by withdrawing the measuring cable (2) the return device (4) can be further tensioned, **characterised in that** the return device (4) is arranged in a housing (5), coupling means (6) for coupling the return device (4) to the rotating movement of the cable drum (1) are provided and locking means (7) operated from outside the housing (5) for locking the current position of the return device (4), in particular the at least lightly tensioned starting position of the return device (4) are or can be associated with the housing (5).

2. A cable length sensor according to claim 1, **characterised in that** the return device (4) comprises at least one, preferably two, three or a plurality of individually or jointly tensionable return elements (4), which in the start position are pre-tensioned between the housing (5) and an axle or between the housing (5) and the coupling means (6), wherein the return elements (4) can be in the form of springs (8), preferably in the form of flat spiral springs.

3. A cable length sensor according to claim 2, **characterised in that** the spring or springs (8) interact via a preferably centrally running axle with the coupling means (9), wherein the axle can extend at least slightly out of the housing (5), wherein the coupling means (6) act preferably between the axle (9) of the return device (4) and an axle (10) of the cable drum (1) and wherein the coupling means (4) can serve for non-rotatable connection of the preferably aligned axles (9, 10).

4. A cable length sensor according to any one of claims 1 to 3, **characterised in that** the return means (4) are arranged in a first housing part (11) and the coupling means (6) are arranged in a second housing part (12) preferably open on the side remote from the first housing part (11), wherein at least the first housing part (11), optionally together with the second housing part (12), can form a kind of spring box.

5. A cable length sensor according to claim 4, **characterised in that** the locking means (7) are associated substantially with the second housing part (12), wherein the locking means (7) can act from outside the housing (5) on the axle (9) of the return device (4) and/or on the coupling means (6) and/or wherein the locking means (7) can comprise at least one arresting pin (14), which extends through the housing wall to the axle (9) of the return device (4) or to the coupling means (6).

6. A cable length sensor according to any one of claims 1 to 5, **characterised in that** the cable drum (1) is arranged in a housing (5) onto which the housing (5) of the return device (4) can be flanged, wherein locking means (15) are associated with the housing (5) of the cable drum (1) and serve to lock the cable drum (1) securely against rotation, wherein the locking means (15) can comprise an arresting pin (16) extending from the outside through the housing (5) and wherein in the position arresting the cable drum (1) the arresting pin (16) can engage an end face of the cable drum (1).

7. A cable length sensor according to claim 6, **characterised in that** the housing (5) of the cable drum (1) has a larger diameter than the housing (5) of the return device (4) and/or **in that** the arresting pin (16) extends into the housing (5) of the cable drum (1) via the end wall of the housing (5) of the cable drum (1), which end wall protrudes beyond the housing (5) of the return device (4).

8. A cable length sensor according to any one of claims 1 to 7, **characterised in that** a sensor element (18) for detecting the rotation of the cable drum (1) is provided, wherein the sensor element (18) can be associated with the rotary axle of the cable drum (1) or of the return device (4).

9. A cable length sensor according to claim 4, **characterised in that** the sensor element (18) is flange-mounted on the face of the cable drum (1) remote from the return device (4), preferably on the housing (5) of the cable drum, and at the same time is connected to the rotary axle (10) of the cable drum (1) for rotation therewith.

10. A cable length sensor according to claim 9, **characterised in that** the sensor element (18) is flanged mounted via a housing connection piece (19) to the housing (5) of the cable drum (1), wherein the sensor element (18) can be a rotary encoder.

## Revendications

1. Transmetteur de longueur de câble, plus particulièrement capteur de déplacement de treuil à câble, avec un tambour de câble (1), un câble de mesure (2) ou bande de mesure enroulée sur le tambour de câble (1) et un dispositif de retour (4) au moins faiblement précontraint dans la position de départ, moyennant quoi le câble de mesure (2) ou la bande de mesure peut être retirée de celui-ci contre la force du dispositif de retour (4) en tournant le tambour à câble (1) et moyennant quoi, grâce à au retrait du câble de mesure (2), le dispositif de retour (4) peut encore être tendu, **caractérisé en ce que** le dispositif de retour (4) est disposé dans un boîtier (5), **en ce que** des moyens d'accouplement (6) sont prévus pour l'accouplement du dispositif de retour (4) au mouvement de rotation du tambour de câble (1) et **en ce que** le boîtier comprend ou peut comprendre des moyens de blocage (7) actionnables de l'extérieur du boîtier, pour le blocage de la position du dispositif de retour (4), plus particulièrement de la position de départ au moins faiblement précontrainte du dispositif de retour (4).

2. Transmetteur de longueur de câble selon la revendication 1, **caractérisé en ce que** le dispositif de retour (4) comprend au moins un, de préférence deux, trois éléments de retour (4) ou plus pouvant être tendus ensemble, qui sont précontraints dans la position de départ entre le boîtier (5) et un axe ou les moyens d'accouplement (6), moyennant quoi les éléments de retour (4) peuvent être conçus comme des ressorts (8), de préférence comme des ressorts plats spiralés.

3. Transmetteur de longueur de câble selon la revendication 2, **caractérisé en ce que** le ou les ressorts (8) interagissent par l'intermédiaire d'un axe central avec les moyens d'accouplement (6), moyennant quoi
l'axe peut s'étendre au moins faiblement hors du boîtier (5), moyennant quoi les moyens d'accouplement (6) agissent de préférence entre l'axe (9) du dispositif de retour (4) et un axe (10) du tambour de câble (1) et moyennant quoi les moyens d'accouplement (4) peuvent servir à la liaison avec blocage en rotation des axes (9, 10) qui sont de préférence alignés.

4. Transmetteur de longueur de câble selon l'une des revendications 1 à 3, **caractérisé en ce que** les éléments de retour (4) sont disposés dans une première partie de boîtier (11) et les moyens d'accouplement (6) dans une deuxième, de préférence dans une deuxième partie de boîtier (12), du côté opposé à la première partie de boîtier (11), moyennant quoi au moins la première partie de boîtier (11), le cas échant avec la deuxième partie de boîtier (12), peut former une sorte de caisson à ressorts.

5. Transmetteur de longueur de câble selon la revendication 4, **caractérisé en ce que** les moyens de blocage (7) correspondent principalement à la deuxième partie de boîtier (12), moyennant quoi
les moyens de blocage (7) peuvent agir de l'extérieur du boîtier (5) sur l'axe (9) du dispositif de retour (4) et/ou sur les moyens d'accouplement (6) et/ou moyennant quoi
les moyens de blocage (7) peuvent comprendre au moins une tige de blocage (14) qui s'étend à travers la paroi du boîtier en direction de l'axe (9) du dispositif de retour (4) ou des moyens d'accouplement (6).

6. Transmetteur de longueur de câble selon l'une des revendications 1 à 5, **caractérisé en ce que** le tambour de câble (1) se trouve dans un boîtier (5) auquel peut être bridé le boîtier (5) du dispositif de retour (4), moyennant quoi le boîtier (5) du tambour de câble (1) peut comprendre des moyens de blocage (15) qui servent à bloquer la rotation du tambour de câble (1), moyennant quoi les moyens de blocage (15) peuvent comprendre une tige de blocage (16) qui s'étend de l'extérieur à travers le boîtier (5) et moyennant quoi la tige de blocage (16) peut s'accrocher, dans sa position bloquant le tambour de câble (1), à une face frontale du tambour de câble (1).

7. Transmetteur de longueur de câble selon la revendication 6, **caractérisé en ce que** le boîtier (5) du tambour de câble (1) présente un diamètre supérieur à celui du boîtier (5) du dispositif de retour (4) et/ou
**en ce que** la tige de blocage (16) dépasse dans le boîtier (5) du tambour de câble (1), au-delà de sa paroi frontale dépassant du boîtier (5) du dispositif de retour (4).

8. Transmetteur de longueur de câble selon l'une des revendications 1 à 7, **caractérisé en ce qu'**un élément de capteur (18) est prévu pour la détection de la rotation du tambour de câble (1), moyennant quoi l'élément de capteur (18) peut être disposé sur l'axe de rotation du tambour de câble (1) ou sur le dispositif de retour (4).

9. Transmetteur de longueur de câble selon la revendication 8, **caractérisé en ce que** l'élément de capteur (18) est bridé sur le côté du tambour de câble (1) opposé au dispositif de retour (4), de préférence sur son boîtier (5) et relié, avec blocage en rotation, à l'axe de rotation (10) du tambour de câble (1).

10. Transmetteur de longueur de câble selon la revendication 9, **caractérisé en ce que** l'élément de capteur (18) est bridé par l'intermédiaire d'un manchon de boîtier (19) au boîtier (5) du tambour de câble (1), moyennant quoi l'élément de capteur (18) peut être un transmetteur de rotation.
